**Europäisches Patentamt**

**European Patent Office**

**Office européen des brevets**

(11) Numéro de publication: **0 142 425**
**A1**

## (12) DEMANDE DE BREVET EUROPEEN

(21) Numéro de dépôt: **84402174.1**

(22) Date de dépôt: **30.10.84**

(51) Int. Cl.⁴: **G 02 B 23/08**

(30) Priorité: **04.11.83 FR 8317526**

(43) Date de publication de la demande:
**22.05.85. Bulletin 85/21**

(84) Etats contractants désignés:
**AT BE CH DE FR GB IT LI LU NL SE**

(71) Demandeur: **SOCIETE D'OPTIQUE, PRECISION ELECTRONIQUE ET MECANIQUE - SOPELEM**
**102 rue Chaptal**
**F-92300 Levallois-Perret(FR)**

(72) Inventeur: **Baluteau, Jean-Michel**
**77 allée de Chartres**
**F-93190 Livry-Gargan(FR)**

(74) Mandataire: **Phélip, Bruno et al,**
**c/o Cabinet Harlé & Phélip 21, rue de la Rochefoucauld**
**F-75009 Paris(FR)**

(54) **Appareil optique de contrôle de l'intérieur de chambres cylindriques.**

(57) La présente invention se rapporte à un appareil optique de contrôle de l'intérieur de chambres cylindriques.

L'appareil selon l'invention qui sert à contrôler l'intérieur d'une chambre (10) comporte un système optique formé de lentilles (3, 4, 5, 71, 72) et devant lesquelles est interposé un réflecteur (2), l'ensemble étant monté dans une monture et il est essentiellement caractérisé par le fait que le réflecteur (2) comporte deux faces planes réfléchissantes (21, 22) inclinées sur l'axe optique (11) et qui permettent de réfléchir les faisceaux lumineux issus de deux secteurs opposés de la chambre afin de former, par l'intermédiaire du système optique de lentilles, des images rectilignes sur au moins un détecteur de lumière (81, 82), des moyens (9) étant prévus pour déplacer relativement, en translation et en rotation, l'appareil par rapport à ladite chambre (10).

EP 0 142 425 A1

./...

Fig 1

1

0142425

<u>Appareil optique de contrôle de l'intérieur de chambres cylindriques</u>

La présente invention se rapporte à un appareil optique de contrôle de l'intérieur de chambres cylindriques.

Il existe des appareils optiques dénommés généralement endoscopes permettant d'examiner l'intérieur de cavités, tubes, trous ou chambres. Un appareil de ce type tel que décrit dans le FR 2.430.026 comporte d'une part un système de lentilles devant lequel est disposé un réflecteur et d'autre part un système d'éclairage par fibres optiques. Une cavité est observée avec un champ de 360° mais l'image d'une section droite est en forme d'anneau centré sur l'axe optique.

La présente invention a pour but de fournir un appareil dans lequel les images de deux secteurs cylindriques opposés d'une chambre cylindrique, d'environ 95° chacun, sont formées sur un même détecteur de lumière rectiligne et qui, par un déplacement rectiligne aller et retour et une rotation d'environ 90°, permet de contrôler la totalité de la surface de cette chambre cylindrique.

L'appareil selon l'invention qui sert à contrôler l'intérieur d'une chambre comporte un système optique formé de lentilles et devant lesquelles est interposé un réflecteur, l'ensemble étant monté dans une monture, et il est essentiellement caractérisé par le fait que le réflecteur comporte deux faces planes réfléchissantes inclinées sur l'axe optique et qui permettent de réfléchir les faisceaux lumineux issus de deux secteurs opposés de la chambre afin de former, par l'intermédiaire du système optique de lentilles, des images rectilignes sur au moins un détecteur de lumière, des moyens étant prévus pour déplacer relativement, en translation et en rotation, l'appareil par rapport à ladite chambre.

Selon une autre caractéristique, l'objectif est constitué par trois groupes convergents de lentilles dont deux au moins sont des doublets.

Selon une autre caractéristique, le système de lentilles comporte en arrière de l'objectif, un véhicule destiné à transporter les images données par ledit objectif.

Selon une autre caractéristique de l'invention, le système optique comporte un séparateur qui laisse passer une partie de la lumière des faisceaux lumineux venant des secteurs vers un détecteur et qui réfléchit une partie de la lumière desdits faisceaux vers un autre détecteur.

L'invention va maintenant être décrite avec plus de détails en se référant à un mode de réalisation donné à titre d'exemple et représenté par les dessins annexés.

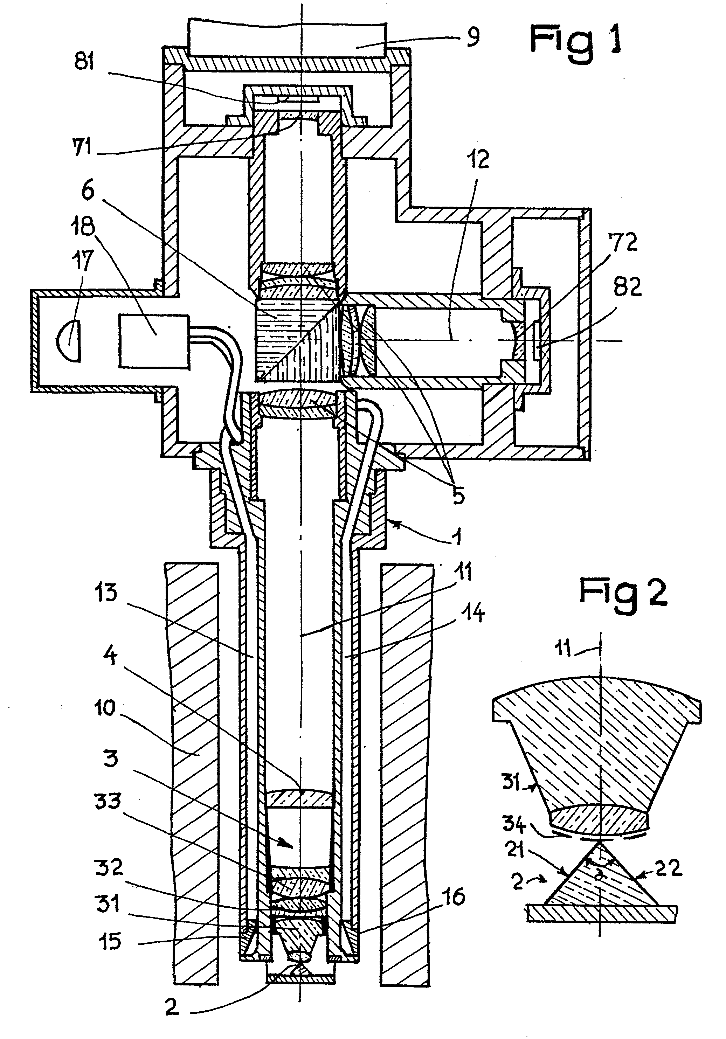

La figure 1 représente une coupe axiale de l'appareil selon l'invention.

La figure 2 est une vue de détail de la partie avant de l'appareil.

L'appareil représenté par les dessins comporte un système d'analyse d'images comportant au moins un détecteur rectiligne de lumière 81, 82, et un système optique 2, 3, 4, 5, 6, 71, 72 formant les images des deux secteurs opposés de la chambre 10 à contrôler sur chaque détecteur de lumière. L'appareil comporte par ailleurs un système d'éclairage capable d'éclairer les deux secteurs.

Les détecteurs, le système optique et le système d'éclairage sont montés dans une monture 1 constituée de plusieurs parties réunies les unes aux autres.

Le système optique est centré sur un axe principal 11 qui est assujetti à rester coaxial à l'axe de la chambre 10 contrôlée.

Le système optique comporte à l'avant un bi-réflecteur 2. Ce bi-réflecteur est suivi par un système de lentilles 3, 4, 5, 71, 72 qui comporte notamment un objectif de tête 3 et qui forme les images des deux secteurs sur chaque détecteur 81 ou 82.

Le bi-réflecteur 2 est pourvu de deux faces planes réfléchissantes 21 et 22 qui sont symétriques par rapport à l'axe optique 11 en formant un angle dièdre aigu et ouvert vers l'avant. Cet angle dièdre est sensiblement égal à 90°. Ce bi-réflecteur réfléchit les faisceaux lumineux venant des deux secteurs opposés de la chambre 10 vers l'objectif de tête 3. Ce bi-réflecteur 2 est par exemple formé par un prisme.

L'objectif 3 dont le champ est supérieur à 90° est formé de trois groupes convergents de lentilles 31, 32, 33 dont au moins deux sont des doublets collés.

Un diaphragme 34 est disposé sur le parcours des faisceaux lumineux entre le bi-réflecteur 2 et l'objectif de tête 3. Il comporte deux ouvertures circulaires disposées symétriquement par rapport à l'axe optique. Ces ouvertures correspondent à deux pupilles et délimitent chacune un faisceau réfléchi par une face du bi-réflecteur.

Le système optique comporte, en arrière de l'objectif de tête 3, successivement, une lentille convergente de champ 4, un véhicule de transport d'images 5, et une lentille divergente 71 ou 72 devant chaque détecteur 81 ou 82.

La lentille de champ 4 est séparée de l'objectif 3 par un intervalle d'air et du véhicule 5 par un autre intervalle d'air.

Le véhicule 5 transporte les images données par l'objectif de tête 3 pour les amener sensiblement sur chaque détecteur 81 ou 82. Cette disposition permet d'éloigner les détecteurs 81 et 82 par rapport au biréflecteur 2 pour qu'elles restent à l'extérieur de la chambre cylindrique à contrôler.

Dans le mode de réalisation représente ici, l'appareil comporte deux détecteurs de lumière 81 et 82 dont l'un enregistre des images nettes des deux secteurs et l'autre enregistre des images floues des deux secteurs. Ces détecteurs 81 et 82 qui sont constitués par des barrettes de diodes de forme rectiligne sont centrés sur deux voies dont les axes optiques sont repérés 11 et 12. Les images sont envoyées sur ces barrettes de diodes par un séparateur 6 centré sur l'axe 11 en arrière de la lentille 4. Ce séparateur laisse passer selon l'axe optique 11, une partie de la lumière des faisceaux venus des secteurs et d'autre part réfléchit, selon l'axe optique 12, une partie de la lumière de ces faisceaux. Le séparateur 6 est par exemple un cube séparateur. Cet agencement permet de traiter les signaux de sortie des barrettes 81, 82 par un dispositif électronique connu qui permet d'analyser les images des secteurs.

Chaque lentille divergente 71 et 72 est disposée en avant d'une barrette de diodes 81 ou 82 et au voisinage des images finales. Ces images finales sont planes et de bonne définition. A cet effet la courbure de l'objet (secteurs) est corrigée au niveau des images.

Le système d'éclairage comporte deux faisceaux de fibres 13 et 14 qui reçoivent la lumière d'une source 17 par l'intermédiaire d'un collecteur 18. Elles s'étendent longitudinalement à l'extérieur du système optique et leurs extrémités se terminent sur des hublots diffusants 15 et 16 qui projettent la lumière sur les secteurs à éclairer.

La partie optique est suspendue à un mécanisme 9 qui la déplace en translation et en rotation par rapport à l'axe optique 11 de manière à effectuer des courses aller et retour et à effectuer une rotation d'environ 90° à chaque fin de course située le plus en avant.

Le fonctionnement du dispositif est le suivant :

Lorsque l'appareil est introduit dans un cylindre, chaque barrette de diode reçoit les deux images des secteurs opposés, d'environ 95° cha-cun, qui sont situés sensiblement sur une section droite du cylindre. Pendant la course aller, l'appareil balaye deux surfaces opposées qui couvrent au moins la moitié de la surface du cylindre. En fin de course, l'appareil pivote de 90°. Pendant la course de retour, l'appareil balaye deux autres surfaces couvrant au moins l'autre moitié de la surface du cylindre. A la fin de la course de retour, la totalité de la surface du cylindre est donc contrôlée.

Il est bien entendu que l'on peut, sans sortir du cadre de l'invention, imaginer des variantes et des perfectionnements de détail et de même envisager l'emploi de moyens équivalents. L'appareil pourrait être fixe et la chambre cylindrique pourrait être déplacée, en translation et rotation, par rapport audit appareil.

L'appareil peut notamment être utilisé pour le contrôle des chambres cylindriques des moteurs.

REVENDICATIONS

1.- Appareil optique de contrôle de l'intérieur d'une chambre cylindrique (10), comportant un système optique formé de lentilles (3, 4, 5, 71, 72) et d'un réflecteur interposé à l'avant de ces lentilles, l'ensemble étant monté dans une monture,

caractérisé par le fait que le réflecteur (2) comporte deux faces planes réfléchissantes (21, 22) inclinées sur l'axe optique (11) et qui permettent de réfléchir les faisceaux lumineux issus de deux secteurs opposés de la chambre afin de former par l'intermédiaire du système optique de lentilles des images rectilignes sur au moins un détecteur de lumière (81, 82), des moyens (9) étant prévus pour déplacer relativement, en translation et rotation, l'appareil par rapport à ladite chambre (10).

2.- Appareil selon la revendication 1,

caractérisé par le fait que l'objectif (3) est constitué par trois groupes convergents de lentilles (31, 32, 33) dont au moins deux sont des doublets collés.

3.- Appareil selon l'une quelconque des revendications précédentes,

caractérisé par le fait que le système optique comporte, en arrière de l'objectif (3), un véhicule (5) destiné à transporter les images données par ledit objectif sur chaque détecteur de lumière (81, 82).

4.- Appareil selon l'une quelconque des revendications précédentes,

caractérisé par le fait que le système optique comporte un séparateur (6) qui laisse passer une partie de la lumière des faisceaux lumineux venant des secteurs vers un détecteur (81) et qui réfléchit une partie de la lumière desdits faisceaux vers un autre détecteur (82).

5.- Appareil selon l'une quelconque des revendications précédentes,

caractérisé par le fait qu'il comporte une lentille de champ (4) entre l'objectif (3) et le véhicule (5).

6.- Appareil selon l'une quelconque des revendications précédentes,

caractérisé par le fait qu'il comporte un diaphragme (34) pourvu de deux ouvertures circulaires matérialisant les deux faisceaux lumineux.

7.- Appareil selon l'une quelconque des revendications précédentes,

caractérisé par le fait qu'il comporte une lentille divergente (71,72) disposée devant chaque détecteur (81, 82).

0142425

1/1

Fig 1

Fig 2

Office européen
des brevets

**RAPPORT DE RECHERCHE EUROPEENNE**

EP   84 40 2174

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,A | FR-A-2 430 026  (R. WOLF GmbH) <br> * Page 2, ligne 15 - page 4, ligne 15; figures 1-4 * | 1,2 | G 02 B   23/08 |
| A | FR-A-2 301 837  (ENGINS MATRA) <br> * Page 3, ligne 35 - page 6, ligne 21; figure 2 * | 1,3,4 | |
| A | EP-A-0 050 922  (SUMITOMO ELECTRIC INDUSTRIES LTD.) <br> * En entier * | 1 | |

DOMAINES TECHNIQUES RECHERCHES (Int. Cl.4)

G 02 B   23/00
A 61 B    1/00

Le présent rapport de recherche a été établi pour toutes les revendications

| Lieu de la recherche | Date d'achèvement de la recherche | Examinateur |
|---|---|---|
| LA HAYE | 04-02-1985 | SARNEEL A.P.T. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82